# EUROPÄISCHE PATENTSCHRIFT

(11) **EP 2 414 761 B1**
(45) Veröffentlichungstag und Bekanntmachung des Hinweises auf die Patenterteilung: **20.02.2013**
(21) Anmeldenummer: 10710558.7
(22) Anmeldetag: 24.03.2010
(51) Int. Cl.: F27D 5/00, C21D 9/00

(54) **KASSETTE**
SAGGAR
CASSETTE

(30) Priorität: 03.04.2009 DE 202009004645 U
(43) Veröffentlichungstag der Anmeldung: 08.02.2012
(73) Patentinhaber: Schunk Ingenieurkeramik GmbH, 47877 Willich-Münchheide (DE)
(72) Erfinder: BRANDS, Detlef, 40667 Meerbusch (DE)
(74) Vertreter: Henseler, Daniela
(86) Internationale Anmeldenummer: PCT/EP2010/001844
(87) Internationale Veröffentlichungsnummer: WO 2010/112166

(56) Entgegenhaltungen:
- DE-U1- 29 906 393

## Beschreibung

Die Erfindung betrifft eine Kassette für das Brennen von keramischen Gegenständen nach dem Oberbegriff des Anspruchs 1.

Aus DE 299 06 393 U1 ist es bekannt, Kassetten als Brennhilfsmittel zu verwenden. Auf die Kassetten werden die jeweiligen Rohlinge für den Brand aufgelegt. Die Kassetten mit den Rohlingen werden übereinander gestapelt in einen Ofen eingebracht. Die Kassette ist aus einem Material mit hoher Hitzebeständigkeit, d.h. z.B. aus einem Schamotte- oder Keramikmaterial gefertigt, beispielsweise aus einer Magnesium-Aluminium-Keramik (z.B. Cordierit). Die Kassette ist H-förmig und besteht im wesentlichen aus einem mittleren, beispielsweise plattenförmigen und in Draufsicht rechteckförmigen Teil und aus zwei an den gegenüberliegenden Schmalseiten des mittleren Teils angeformten Stegen. Als Auflage für den Rohling sind an der Oberseite des mittleren Teils der Kassette zwei Tragstücke oder Tragleisten vorgesehen, die ebenfalls aus einem Material mit hoher Hitzebeständigkeit gefertigt sind. Durch die Tragstücke/Tragleisten ist gewährleistet, dass die Auflageflächen für die jeweiligen Rohlinge gering sind. Nachteilig ist, dass die an den Kassetten gebildeten Anlagen für die Rohlinge passen müssen und zudem im Laufe der Zeit verschmutzen. Es ist deshalb vorgesehen, die Anlagen austauschbar an der jeweiligen Kassette auszubilden.

Aufgabe der Erfindung ist es daher, eine Kassette zu schaffen, die einen höheren Flexibilisierungsgrad besitzt.

Diese Aufgabe wird durch die Merkmale des Anspruchs 1 gelöst.

Hierdurch wird eine Kassette geschaffen, deren konstruktive Gestaltung eine beidseitige Nutzung der Kassette als Auflage für Rohlinge ermöglicht. Ein hoher Flexibilisierungsgrad im Einsatz der Kassette ist somit gewährleistet. Durch die Verwendung einer drehbaren Wendekassette ist der logistische Aufwand bei einem Produktionswechsel im Ofen signifikant reduziert. Das Hohlprofil reduziert ferner die thermische Masse, woraus sich Kosteneinsparungen in der Anwendung ergeben. Weiterhin liefert das Hohlprofil eine hohe Stabilität, so dass großflächige Multi-Auflagen ausgebildet werden können.

Die Kassette kann erfindungsgemäß in symmetrischer oder asymmetrischer Ausführung ausgebildet sein. Durch eine Drehung um 180° können dann beispielsweise gleiche Auflagestellungen oder andere Auflagestellungen gewählt werden zur Anpassung an einen bestimmten Produktionsprozess.

Vorzugsweise besteht das H-Profil aus einer technischen SiC-Keramik, wodurch sich Vorteile hinsichtlich Produktionsstandzeit und Dauerstandsfestigkeit ergeben. Geringere thermische Massen sind sowohl werkstoffbedingt möglich als auch formbedingt möglich durch das Vorsehen von Aussparungen.

Weiterhin bevorzugt ist das Vorsehen eines mittigen Brückenabschnitts, wodurch eine vierfach Wendekassette ausbildbar ist.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine perspektivische Ansicht einer Kassette gemäß einem ersten Ausführungsbeispiel,
Fig. 2 zeigt schematisch eine Seitenansicht einer Kassette gemäß einem zweiten Ausführungsbeispiel,
Fig. 3 zeigt schematisch eine Seitenansicht einer Kassette gemäß einem dritten Ausführungsbeispiel,
Fig. 4 zeigt mehrere Kassetten gemäß Fig. 2 in einer Stapelanordnung,
Fig. 5 zeigt schematisch eine Seitenansicht einer Kassette gemäß einem dritten Ausführungsbeispiel,
Fig. 6 zeigt schematisch eine perspektivische Ansicht der Kassette gemäß Fig. 5.

Die Erfindung betrifft eine Kassette 1 für das Brennen von keramischen Gegenständen in einem Ofen. Insbesondere betrifft die Erfindung eine Kassette 1 für das Brennen von Dachziegeln, für die die Kassette 1 eine Brennauflage bildet.

Die Kassette 1 umfasst ein H-Profil 2 mit daran gebildeten Auflagen für mindestens einen Rohling. Das H-Profil 2 ist als zweischaliges Hohlprofil ausgebildet, das ober- und unterseitig jeweils eine Abstützungswand 7, 8 mit Auflagen 3, 4 sowie 5, 6 für mindestens einen Rohling aufweist, die bezüglich Kassettenwendestellungen angeordnet sind.

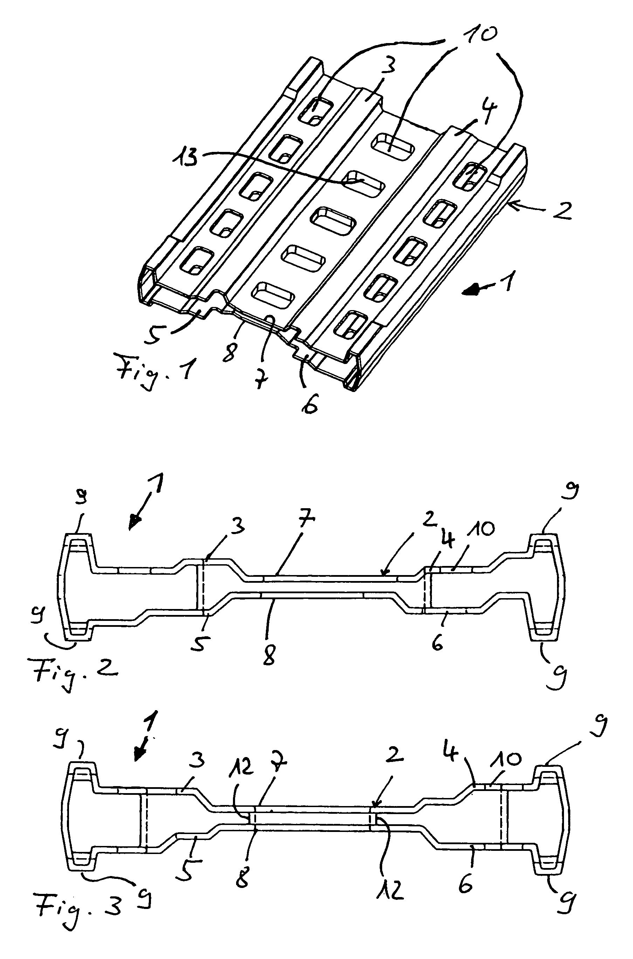

Wie Fig. 2 zeigt, sind bei einer asymmetrischen Ausbildung die beiden Abstützungswände 7, 8 mit unterschiedlich angeordneten Auflagen 3, 4 auf der oberen Abstützungswand 7 einerseits und Auflagen 5, 6 auf der unteren Abstützungswand 8 andererseits versehen.

Gemäß Fig. 3 sind die beiden Abstützungswände 7, 8 bezüglich der beiden Kassettenwendestellungen durch Drehung um 180° mit spiegelbildlich angeordneten Auflagen 3, 4 und 5, 6 versehen.

Weiterhin kann vorzugsweise vorgesehen sein, dass zwischen den Abstützungswänden 7,8 durchgezogene Wände 12 zur Erhöhung der Stabilität angeordnet sind.

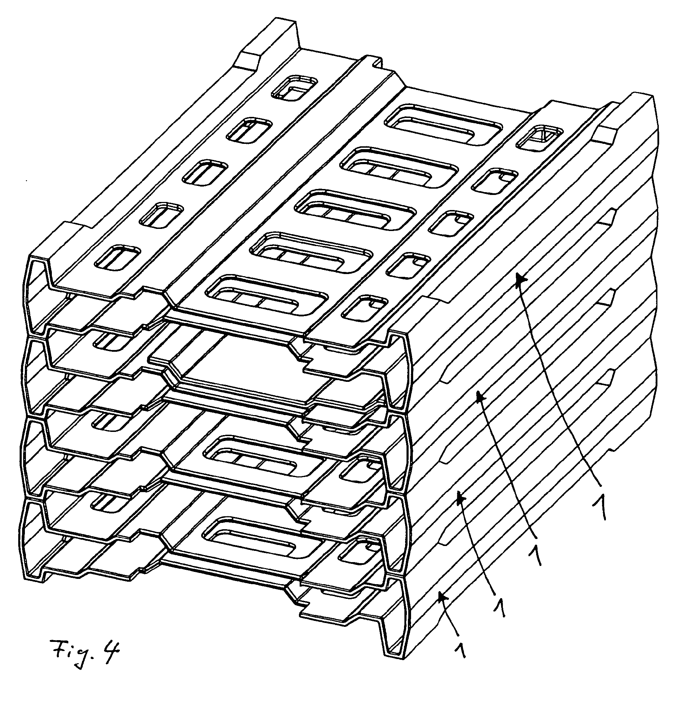

Die Kassette 1 ist ferner mit Stapelflächen 9 versehen für eine Stapelanordnung wie sie beispielsweise in Fig. 4 dargestellt ist für vier übereinander angeordnete Kassetten 1.

Das H-Profil 2 besteht vorzugsweise aus einer SiC-Keramik. Als Werkstoffe für das H-Profil 2 sind insbesondere die folgenden Werkstoffe verwendbar: siliziuminfiltriertes, reaktionsgebundenes SiC (RBSiC); siliziertes, rekristallisiertes SiC (SiSiC); rekristallisiertes SiC(RSiC); Siliziumnitrid gebundenes SiC(NSiC); drucklos gesintertes SiC(SSiC); Flüssigphasen gesintertes SiC (SSiC); silicatischgebundenes SiC. Als alternative Werkstoffe sind einsetzbar: Mullit gebundenes Al₂O₃; Korund; Silimanit; Al₂O₃; Zircon-silicatisch; Cordierit/Mullit.

Die Abstützungswände 7, 8 können zur Reduzierung der thermischen Masse Aussparungen 10 aufweisen. Um die mittleren Aussparungen 10 ist eine die mittlere Aussparung 10 umgebende durchgehende Wand 13 angeordnet, die auch der Stabilität der Kassette 1 dient. Gestaltung, Form, Lage und Anzahl der Aussparungen 10 sind individuell festlegbar.

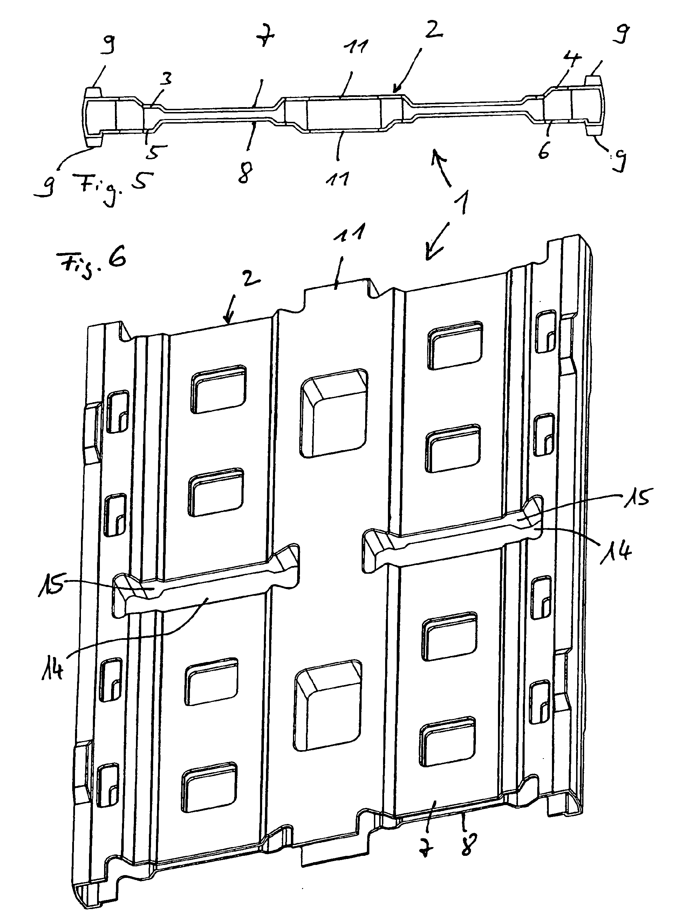

Wie Fig. 5 und Fig. 6 zeigen, kann optional vorgesehen sein, dass die Abstützungswände 7, 8 jeweils einen mittigen Brückenabschnitt 11 mit einer Doppelauflage für benachbart auflegbare Rohlinge aufweisen.

Wie Fig. 6 zeigt, können beispielsweise vier Rohlinge bzw. Gegenstände auf einer Kassette 1 aufgelegt werden.

Die Kassette 1 ist vorzugsweise als Mehrfachkassette ausbildbar, um eine wählbare Anzahl von Gegenständen auf eine Kassette 1 aufzulegen. Die Abmessungen der Kassette 1 sind hierzu wählbar.

Die in der Fig. 6 gezeigte Kassette 1 als Mehrfachkassette ergibt sich im Wesentlichen aus einer matrixförmigen Anordnung (2 x 2) der in Fig. 1 gezeigten Kassette 1. Die in Fig. 6 gezeigte Mehrfachkassette weist innerhalb der Kassette 1 Aussparungen 14 auf, die von einer durchgehenden Wand 15 umgeben sind. Die Aussparungen 14 erstrecken sich jeweils vom Brückenabschnitt 11 bis zu den Auflage 3, 5 bzw. 4, 6. Die Aussparungen 14 ergeben sich im Wesentlichen aus der Aneinanderfügung der in Fig. 1 gezeigten Kassette 1 bei einer zweireihigen und einer zweispaltigen Anordnung aus den endseitigen Ausnehmungen der in Fig.1 gezeigten Kassette und Ausbildung der Wand 15 zur Umgrenzung der Aussparung 14. Die Wand 15 erhöht die Stabilität der Mehrfachkassette. Durch die endseitigen Aussparungen der Kassette 1 gemäß Fig. 1 ergeben sich bei einer modularen matrixförmigen Aneinanderreihung von Formen für die Mehrfachkassette bei der Herstellung derselben zwangsläufig Aussparungen 14, die zur Gewichtsreduzierung führen und gleichzeitig eine Einbringregion für Wände 15 zur Stabilitätserhöhung ermöglichen.

Bei einer (2 x 1) Anordnung der in Fig. 1 gezeigten Kassette 1 ergeben sich durch die Aneinanderfügung Aussparungen, die sich von der Auflage 3 bzw. 5 zur Auflage 4 bzw. 6 erstrecken. Auch hier kann eine umlaufende durchgehende Wand vorgesehen sein.

## Patentansprüche

1. Kassette (1) für das Brennen von keramischen Gegenständen in einem Ofen umfassend ein H-Profil (2) und daran gebildete Auflagen für mindestens einen Rohling, **dadurch gekennzeichnet, dass** das H-Profil (2) als zweischaliges Hohlprofil ausgebildet ist, und das zweischalige Hohlprofil ober- und unterseitig jeweils eine Abstützungswand (7, 8) mit Auflagen (3, 4; 5, 6) für mindestens einen Rohling aufweist, die bezüglich Kassettenwendestellungen angeordnet sind zur beidseitigen Nutzung als Auflage für Rohlinge.

2. Kassette (1) nach Anspruch 1, **dadurch gekennzeichnet, dass** die beiden Abstützungswände (7, 8) bezüglich der beiden Kassettenwendestellungen durch Drehung um 180° mit spiegelbildlich angeordneten Auflagen (3, 4; 5, 6) versehen sind.

3. Kassette (1) nach Anspruch 1, **dadurch gekennzeichnet, dass** die beiden Abstützungswände (7, 8) mit unterschiedlich angeordneten Auflagen (3, 4; 5, 6) versehen sind.

4. Kassette (1) nach einem der Ansprüche 1 bis 3, **dadurch gekennzeichnet, dass** das H-Profil (2) aus einer SiC-Keramik besteht.

5. Kassette(1) nach einem der Ansprüche 1 bis 4, **dadurch gekennzeichnet, dass** die die Abstützungswände (7, 8) zur Reduzierung der thermischen Masse Aussparungen (10) aufweisen.

6. Kassette (1) nach einem der Ansprüche 1 bis 5, **dadurch gekennzeichnet, dass** die Abstützungswände (7, 8) jeweils einen mittigen Brückenabschnitt (11) mit einer Doppelauflage für benachbart auflegbare Rohlinge aufweist.

7. Kassette (1) nach einem der Ansprüche 1 bis 6, **dadurch gekennzeichnet, dass** durchgezogene Wände (12) zwischen den Abstützungswänden (7, 8) angeordnet sind.

8. Kassette (1) nach einem der Ansprüche 1 bis 7, **dadurch gekennzeichnet, dass** durch eine Aneinanderreihung von Kassetten (1) eine Mehrfachkassette zur Auflage mehrerer Gegenstände ausbildbar ist.

## Claims

1. Cassette (1) for firing ceramic articles in a kiln, comprising an H profile (2) and rests formed thereon for at least one blank, **characterized in that** the H profile (2) is in the form of a two-shell hollow profile, and the two-shell hollow profile has on its top side and underside in each case a supporting wall (7, 8) having rests (3, 4; 5, 6) for at least one blank, which are arranged with respect to cassette turning positions such that both sides can be used as a rest for blanks.

2. Cassette (1) according to Claim 1, **characterized in that** the two supporting walls (7, 8) are provided with mirror-symmetrically arranged rests (3, 4; 5, 6) with respect to the two cassette turning positions by rotation through 180°.

3. Cassette (1) according to Claim 1, **characterized in that** the two supporting walls (7, 8) are provided with differently arranged rests (3, 4; 5, 6).

4. Cassette (1) according to one of Claims 1 to 3, **characterized in that** the H profile (2) consists of a SiC ceramic.

5. Cassette (1) according to one of Claims 1 to 4, **characterized in that** the supporting walls (7, 8) have recesses (10) for reducing the thermal mass.

6. Cassette (1) according to one of Claims 1 to 5, **characterized in that** the supporting walls (7, 8) each have a central bridge section (11) having a double rest for adjacently positionable blanks.

7. Cassette (1) according to one of Claims 1 to 6, **characterized in that** continuous walls (12) are arranged between the supporting walls (7, 8).

8. Cassette (1) according to one of Claims 1 to 7, **characterized in that** a multiple cassette for supporting a plurality of articles is formable by arranging cassettes (1) alongside one another.

## Revendications

1. Cassette (1) pour la cuisson d'objets en céramique dans un four, comportant un profil en H (2) et des supports qui y sont formés pour la réception d'au moins un brut, **caractérisée en ce que** ledit profil en H (2) est constitué sous la forme d'un profil creux à deux coques, et **en ce que** ledit profil creux à deux coques comporte, sur sa face supérieure et sur sa face inférieure à chaque fois une paroi d'appui (7, 8) avec des supports (3, 4 ; 5, 6) pour au moins un brut, qui sont agencées, relativement au retournement des cassettes, pour l'utilisation sur les deux faces comme support pour des bruts.

2. Cassette (1) selon la revendication 1, **caractérisée en ce que** lesdites deux parois d'appui (7, 8) sont prévues avec desdits supports (3, 4 ; 5, 6) disposés de façon symétrique, relativement au retournement des cassettes par pivotement de 180°.

3. Cassette (1) selon la revendication 1, **caractérisée en ce que** lesdites deux parois d'appui (7, 8) sont prévues avec desdits supports (3, 4 ; 5, 6) disposés de façon différente.

4. Cassette (1) selon l'une des revendications 1 à 3, **caractérisée en ce que** ledit profil en H (2) se compose d'une céramique en carbure de silicium SiC.

5. Cassette (1) selon l'une des revendications 1 à 4, **caractérisée en ce que** lesdites parois d'appui (7, 8) comportent des évidements (10) pour la réduction de la masse thermique.

6. Cassette (1) selon l'une des revendications 1 à 5, **caractérisée en ce que** lesdites parois d'appui (7, 8) comportent à chaque fois une section médiane faisant pont (11), avec un double support pour des bruts à déposer au voisinage l'un de l'autre.

7. Cassette (1) selon l'une des revendications 1 à 6, **caractérisée en ce que** des entretoises traversantes (12) sont disposées entre lesdites parois d'appui (7, 8).

8. Cassette (1) selon l'une des revendications 1 à 7, **caractérisée en ce qu'**une cassette multiple est composable par une rangée de dites cassettes posées l'une à coté de l'autre (1) pour le support de plusieurs objets.
